# EUROPÄISCHE PATENTSCHRIFT

(11) **EP 2 194 217 B1**
(45) Veröffentlichungstag und Bekanntmachung des Hinweises auf die Patenterteilung: **19.10.2011**
(21) Anmeldenummer: 09014143.3
(22) Anmeldetag: 12.11.2009
(51) Int. Cl.: E05B 13/10, E05C 19/06, H02G 3/14

(54) **Mehrteilige Gehäuse mit Verriegelungsvorrichtung**
Multi-section housing with locking device
Boîtier en plusieurs parties avec dispositif de verrouillage

(30) Priorität: 04.12.2008 DE 102008060561
(43) Veröffentlichungstag der Anmeldung: 09.06.2010
(73) Patentinhaber: Harting Electric GmbH & Co. KG, 32339 Espelkamp (DE)
(72) Erfinder: Schmidt, Martin, 32312 Lübbecke (DE); Quast, Frank, 33611 Bielefeld (DE); Olejarz, Klaus, 32584 Löhne (DE)

(56) Entgegenhaltungen:
- CH-A- 257 902
- DE-C1- 3 910 109
- FR-A5- 2 115 626
- GB-A- 208 947
- US-A- 4 630 852

## Beschreibung

Die Erfindung ein zumindest zweiteiliges Gehäuse mit einem Seitenwände aufweisenden Gehäuseoberteil mit einem Betätigungsknopf, der im Eingriff mit einem im Inneren des Gehäuseoberteiles angeordneten Federhebel steht, einem dazu passenden Gehäuseunterteil, und mit einer Verrigelungsvorrichtung.

Eine Verriegelungsvorrichtung wird benötigt, um zwei Gehäusehälften verrastbar, wahlweise aber auch verriegelbar zusammen zu halten und wieder zu lösen, wobei eine von äußeren Umwelteinflüssen unabhängige Funktion zu gewährleisten ist.

### Stand der Technik

Aus der EP 1 046 769 B1 ist ein Schwenkhebelverschluss mit einer Druckknopfverriegelung für den Schwenkhebel bekannt, der zum Verriegeln von Schaltschranktüren oder ähnlichem vorgesehen ist.

In der schweizerischen Patentschrift Nr. 257902 ist eine Verschlusseinrichtung an Deckelkoffern von Schreibmaschinen beschrieben, die eine am Kofferdeckel angeordnete, und beim Schließen desselben mit dem Kofferunterteil in Wirkungsverbindung tretende Schnappfeder aufweist, auf der ein durch eine Durchbrechung der Deckelwandung ragendes Gehäuse mit einem Sperrmechanismus angeordnet ist, der mindestens ein in eine Vertiefung im Kofferdeckel einschiebbares Sperrorgan aufweist.

Des Weiteren zeigt die englische Patentschrift GB 208,947 eine Verriegelungsvorrichtung für ein zweiteiliges Schmuckkästchen, mit einem von außen zugänglicher Stöpsel, der in der unteren Hälfte des Kästchens, gegen ein L-förmiges elastisches Element drückt. Das L-förmige Element ist mit einem Schenkel innerhalb der unteren Kästchenhälfte befestigt und weist an seinem anderen Ende einen Fanghaken auf, der an einer an der oberen Kästchenhälfte fixierten Haltelasche verrastbar ist. Beim Eindrücken des Stöpsels wir der Fanghaken von der Haltelasche freigestellt, und das Kästchen kann geöffnet werden.

In der DE 39 10 109 C1 ist eine Verschlusseinrichtung für einen kastenförmigen Behälter gezeigt, bei der durch Druck auf einen Betätigungsknopf das Deckelteil des Behälters etwas aus Schließstellung angehoben wird und dort zunächst verbleibt, so dass die entriegelte Stellung des Deckelteiles deutlich angezeigt ist.

### Aufgabenstellung

Der Erfindung liegt daher die Aufgabe zugrunde, mit einer innenliegenden ein zweiteiliges Gehäuse Verriegelung zu entwerfen, welche vor funktionsbeemträchtigen Umwelteinflüssen geschützt ist, und wobei von außen optisch erkennbar ist, ob die Verriegelung wirksam ist, und dass die Verriegelung weiterhin eine Abschließfunktion gegen unbefugten Zugriff aufweist.

Diese Aufgabe wird dadurch gelöst, dass mindestens an einer von zwei gegenüberliegenden Seitenwänden des Gehäuseoberteiles, innerhalb von kreisförmigen Anformungen, jeweils ein von außen bedienbarer Betätigungsknopf angeordnet ist, dass der Betätigungsknopf als kombinierter Dreh- und Druckknopf ausgebildet ist, und dass der Federhebel in Abhängigkeit der Stellung des Betätigungsknopfes eine verrastende Verbindung oder eine verriegelnde Verbindung zwischen den beiden Gehäuseteilen bewirkt.

Vorteilhafte Ausgestaltungen der Erfindung sind in den Ansprüchen 2 - 12 angegeben.

Bei der Erfindung handelt es sich um ein Gehäuse mit einer Verriegelungsvorrichtung zur lösbaren Verbindung eines Gehäuseoberteiles mit einem Gehäuseunterteil, wobei die Verriegelungsvorrichtung wahlweise eine Verrastung der beiden Gehäuse und eine zusätzlich wählbare Verriegelung beinhaltet.

Die Mechanik für die Verriegelungsvorrichtung ist innerhalb einer Gehäusehälfte, dem Gehäuseoberteil, an mindestens einer Gehäusewand integriert, so dass vorteilhafterweise Umwelteinflüsse nicht weiter relevant sind. Zudem sind keine äußerlich signifikant vorstehende Anformungen vorhanden.

Dabei sind lediglich drei bewegliche Teile im Gehäuseoberteil vorgesehen: ein Betätigungsknopf mit einer Dichtung und ein Federhebel.

Während in dem Gehäuseunterteil lediglich eine Anformung als Rastnase zum Verrasten vorgesehen ist.

Die mit der Erfindung erzielten Vorteile bestehen insbesondere darin, dass die Gehäusehälften zunächst beim Zusammenstecken mittels der Verriegelungsvorrichtung, automatisch verrasten, und erst durch einen Druck auf an zwei gegenüber liegenden Seiten des Gehäuseoberteiles angeordneten Betätigungsknopf wieder entriegelbar ist.

Zusätzlich ist vorteilhaft eine Verriegelung der beiden Gehäusehälften vorgesehen, die wirksam wird, wenn der Betätigungsknopf nach dem Einrasten der Verriegelungsvorrichtung, 90° um seine Achse gedreht wird, und damit ein einfaches Entfernen des Gehäuseoberteiles zumindest ohne Werkzeug zunächst verhindert.

Das Gehäuseoberteil ist im Bereich des Betätigungsknopfes mit einer Kreisringdichtung gegen Umwelteinflüsse abgedichtet.

Wobei die Dichtung farblich markiert ist, und derartig an dem Betätigungsknopf angeordnet ist, dass im nicht verriegelten Zustand, wenn der Betätigungsknopf leicht aus dem Gehäuse hervorsteht, vorteilhafterweise die farbliche Markierung den nicht verriegelten Zustand optisch hervorhebt.

Wenn der Betätigungsknopf verriegelt ist, ist auch die Dichtung nicht mehr sichtbar.

Der Betätigungsknopf steht in Eingriff mit dem im Gehäuseinneren angeordneten Federhebel. Der Federhebel besteht aus einem längsgeformten federeiastischen Material und ist jeweils auf der Innenseite des Gehäuseoberteiles angeordnet. Dabei ist der Federhebel im Gehäuseoberteil mittels zwei Haltewinkeln in einer Ausnehmung an jeweils einer Seitewand beweglich festgelegt, während das andere Federhebelende eine Öffnung zum Verrasten an einer Nase am Gehäuseunterteil aufweist. Etwa mittig des Federhebels ist eine weitere Öffnung vorgesehen, durch die eine am Betätigungsknopf angeformte Achse hindurch geführt ist.

Auf der Achse des Betätigungsknopfes ist ein Knebel angeformt, der an der mittleren Öffnung des Federhebels anliegt, während auf der anderen Seite des Federhebels ein am Ende der Achse angeordneter Sperrhaken vorgesehen ist, mit dem der Federhebel mittels des Betätigungsknopfes kontrolliert wird.

Beim Zusammenstecken der beiden Gehäusehälfte werden diese automatisch verrastet. Erst mit einem Druck auf die zwei Betätigungsknöpfe, vorzugsweise an den gegenüberliegenden Seitenwänden am Gehäuseoberteil angeordnet, wird die Rastöffnung im Federhebel vom Rasthaken im Gehäuseunterteil entfernt und das Gehäuseoberteil kann entfernt werden. Während für eine zusätzliche Verriegelung, der Betätigungsknopf um 90° zu drehen ist und mittels einer speziell ausgebildeten mechanischen Vorrichtung den Federhebel derartig an dem Rasthaken festlegt, so dass ein Entfernen des Gehäuseoberteiles nicht möglich ist.

### Ausführungsbeispiel

Ein Ausführungsbeispiel der Erfindung ist in der Zeichnung dargestellt und wird im folgenden näher erläutert. Es zeigen:
- Fig. 1a: ein Gehäuseoberteil,
- Fig. 1b: ein zum Gehäuseoberteil adäquates Gehäuseunterteil,
- Fig. 2: einen Betätigungsknopf,
- Fig. 3: einen Dichtring,
- Fig. 4: einen Federhebel,
- Fig. 5: die Funktionsweise der Verriegelungsvorrichtung beim Verrasten der gesteckten Gehäuseoberteile und Gehäuseunterteile,
- Fig. 6: die Funktionsweise der Verriegelungsvorrichtung beim Verriegeln eines Gehäuseoberteiles mit dem Gehäuseunterteil,
- Fig. 7: die Funktionsweise der Entriegelung zweier Gehäuse,
- Fig. 8: die Mechanik zur Steuerung von Verriegelung und Verrastung, und
- Fig. 9: eine im Betätigungsknopf vorgesehene Werkzeugöffnung.

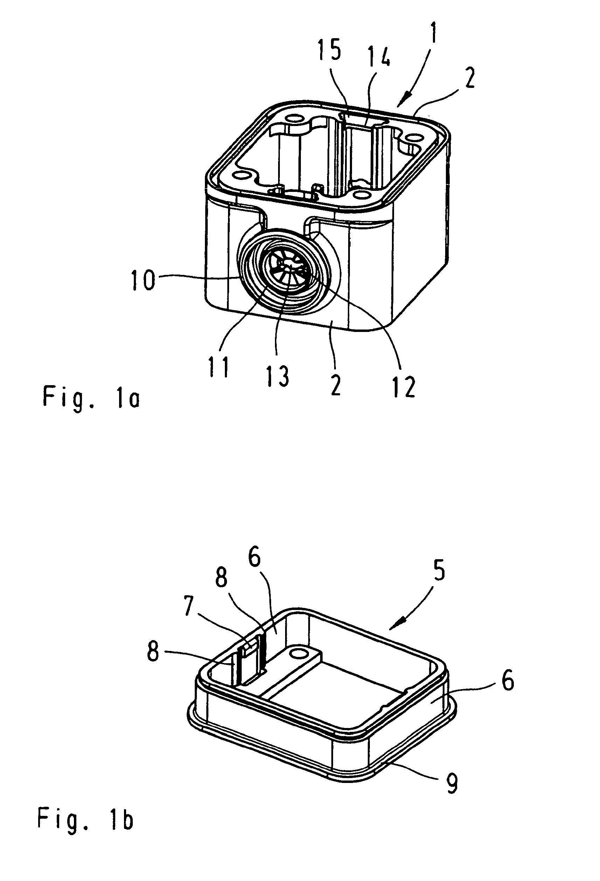

In der Fig.1a ist ein Gehäuseoberteil 1, dass in zwei gegenüberliegenden Seitenwänden 2 entsprechende Formgebungen zur Aufnahme einer Verriegelungsvorrichtung mit einem Betätigungsknopf 20 aufweist, mit einem dazu passenden Gehäuseunterteil 5 gezeigt.

Anzumerken ist, dass eine Abdeckung des Gehäuseoberteiles 1, in der eine Kabelzuführung vorgesehen ist, hier nicht weiter gezeigt ist.

Bei dem rahmenförmigen Gehäuseunterteil 5 in Fig. 1b, das zur festen Schraubmontage über einer Wanddurchführung vorgesehen und dazu von einem Flansch 9 umgeben ist, ist lediglich eine an einer Seiteninnenwand 6 angeformte Rastnase 7 sowie links und rechts davon beabstandet, eine Führungsschiene 8 von Relevanz.

Das Gehäuseoberteil 1 zeigt Anformungen mit einem nach außen gewölbten kreisförmigen, äußeren Wulst 10 innerhalb dessen ein zweiten kleinerer, kreisförmiger Wulst 11 eingeformt ist.

Wobei innerhalb des zweiten, inneren Wulstes 11 einige spezielle Strukturen eingeformt sind, die auch eine Schlitzöffnung 12 mit einer zentralen Kreisöffnung 13 aufweisen, und deren Funktionsweise weiter unten erklärt werden.

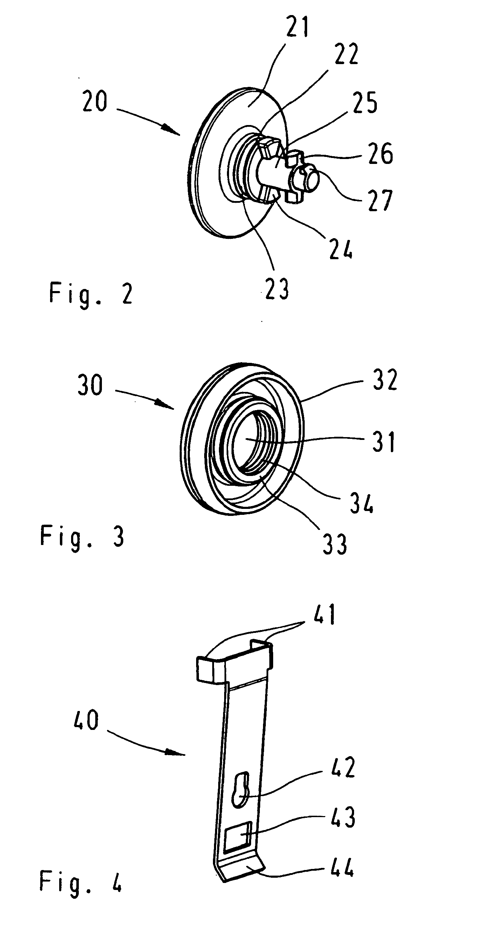

Die Fig. 2 zeigt den Betätigungsknopf 20 mit einer flachen Druckscheibe 21 und einer achsförmigen Anformung mit unterschiedlichen Konturen zum Steuern der Bewegung und der Sperrung des Betätigungsknopfes.

An die Druckscheibe 21 ist zunächst ein Bund 22 mit einer umlaufenden Nut 23 angefügt, und an den Bund 22 wiederum ist eine Achse 25 mit einem Knebel 26 und einem abschließenden Sperrhaken 27 am Ende der Achse angeformt.

Die Stirnseite des Bundes 22 zur Achse 25 zeigt eine erhabene X-förmige Sperrstruktur 24, deren Bedeutung weiter unten erklärt wird.

Die Fig. 3 zeigt einen Dichtring 30 der zwischen dem Betätigungsknopf 20 und dem Gehäuseoberteil 1 angeordnet ist.

Der Dichtring 30 weist eine U-förmige Querschnittstruktur auf, die mit einer inneren Lippe 33 und einer äußeren Lippe 32 eine Doppellippe bildend, sowie mit einer zentralen Kreisöffnung 31 ausgestattet, innerhalb des ersten Wulstes 10 an der Seitenwand 2 angeordnet ist und eine Abdichtung des Betätigungsknopfes 20 zum Gehäuseoberteil 1 bewirkt.

In der Fig. 4 ist ein Federhebel 40 dargestellt, der zusammen mit dem Betätigungsknopf 20 für die Rast- und Verriegelungsfunktionen verantwortlich ist. Der Federhebel ist als längliches, streifenförmiges Stanzteil aus federelastischen Material gefertigt.

Dabei ist an dem hier oben gezeigten Ende ein vom Stanzteil abgewinkelter U-förmiger Haltewinkel 41 vorgesehen, während das entgegengesetzten Ende, eine leicht abgewinkelte Abbiegung 44 aufweist.

Im mittleren, geraden Bereich des Federhebels sind eine Schlüsselloch-Öffnung 42 sowie eine rechteckige Rastöffnung 43 eingestanzt.

Dabei ist die Schlüsselloch-Öffnung 42 zur Durchführung der Achse 25 des Betätigungsknopfes 20 vorgesehen, wobei der Federhebel 40 zwischen dem

Knebel 26 und dem Sperrhaken 27 des Betätigungsknopfes 20 gehalten ist, während die rechteckige Rastöffnung 43 zum Verrasten an der Rastnase 7 am Gehäuseunterteil5 vorgesehen ist. Der Federhebel ist innerhalb von zwei senkrecht angeformten Führungsschienen 3 innerhalb des Gehäuseoberteiles geführt.

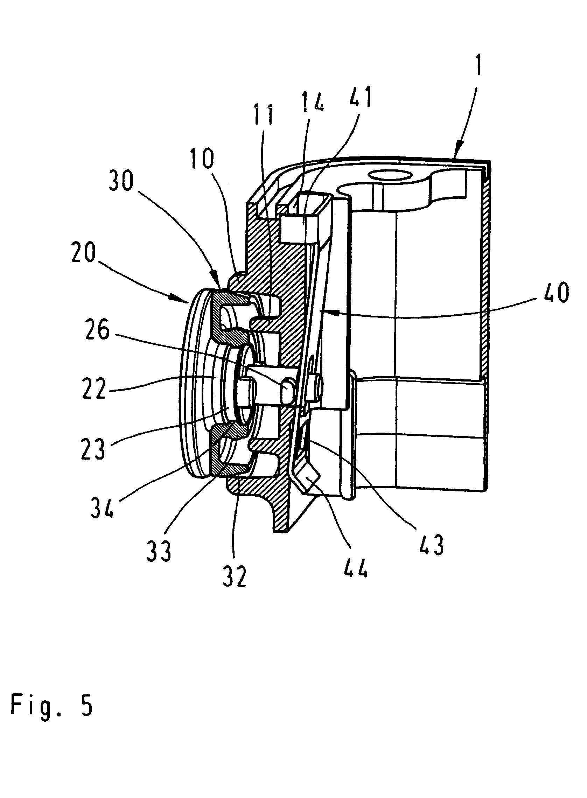

Die Fig. 5 zeigt in einer Schnittdarstellung ein mit dem Gehäuseunterteil 5 verrastetes Gehäuseoberteil 1.

Beim Zusammenfügen der beiden Gehäuseteile tritt sofort eine verrastende Wirkung der Verriegelungseinheit ein, in dem eine am Gehäuseunterteil 5 angefügte Rastnase 7 in die Rastöffnung 43 des Federhebels 40 eingreift. Dabei ist ein Schnitt durch das Zentrum der beiden Wulste 10, 11 in einer der Seitenwände 2 des Gehäuseoberteiles 1 gezeigt.

So ist der Betätigungsknopf 20 mit seiner Druckscheibe 21 noch außerhalb des ersten, äußeren Wulstes 10 angeordnet.

Auf der Anformung des Bundes 22 ist der Dichtring 30 fixiert, in dem an der die Kreisöffnung 31 bildenden Innenlippe 33 ein erhabener Bund 34 angeformt ist, der in die auf dem Bund 22 vorgesehene Ringnut 23 eingreift. Weiterhin ist die Achse 25 durch die Schlitz- und Kreisöffnung 12,13 der Gehäusewand 2 sowie die Schlüssellochöffnung 42 des Federhebels 40 geführt, wobei der Federhebel 40 zwischen dem Knebel 26 und dem Sperrhaken 27 am Ende der Achse 25 beweglich aber geführt gehalten wird.

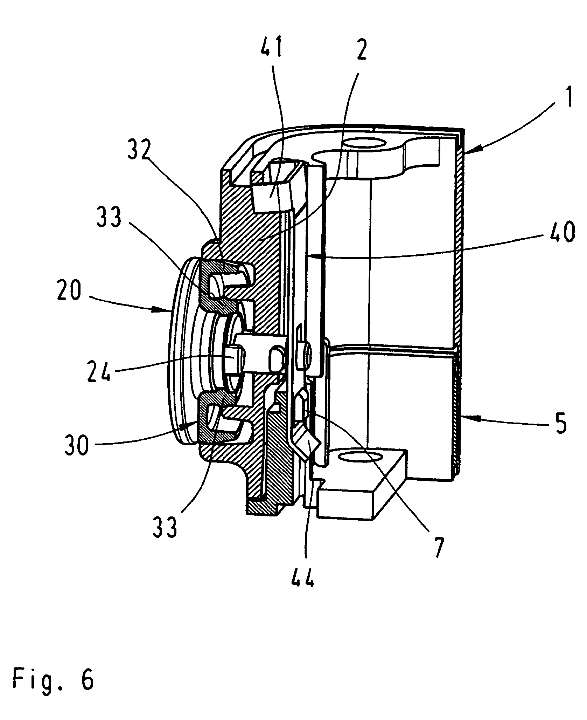

Die Fig. 6 zeigt ein auf das Gehäuseunterteil 5 aufgestecktes Gehäuseoberteil 1.

Dabei wird der Betätigungsknopf 20 in den ersten, äußeren Wulst 10 hineingezogen, weil die Seitenwand 6 des Gehäuseunterteiles 5 sich zwischen die Seitenwand 2 des Gehäuseoberteiles 1 und die Abbiegung 44 des Federhebels 40 schiebt, wobei der Haltewinkel 41 sich innerhalb einer Ausnehmung 14 an der Seitenwand 2 des Gehäuseoberteiles 1 abstützt, und der Federhebel 40 nahezu senkrecht zwischen den Seitenteilen der Nut 14 ausgerichtet ist und so den Betätigungsknopf 20 zum Gehäuse zieht.

Wird auf den Betätigungsknopf 20, wie in der Fig. 6 gezeigten Stellung, ein Druck ausgeübt, so wird der Federhebel 40 mittels des Knebels 26 ebenfalls nach innen gedrückt, so dass die Rastöffnung 43 die Rastnase 7 freigibt, und die Gehäuse 1 und 5 voneinander zu trennen sind.

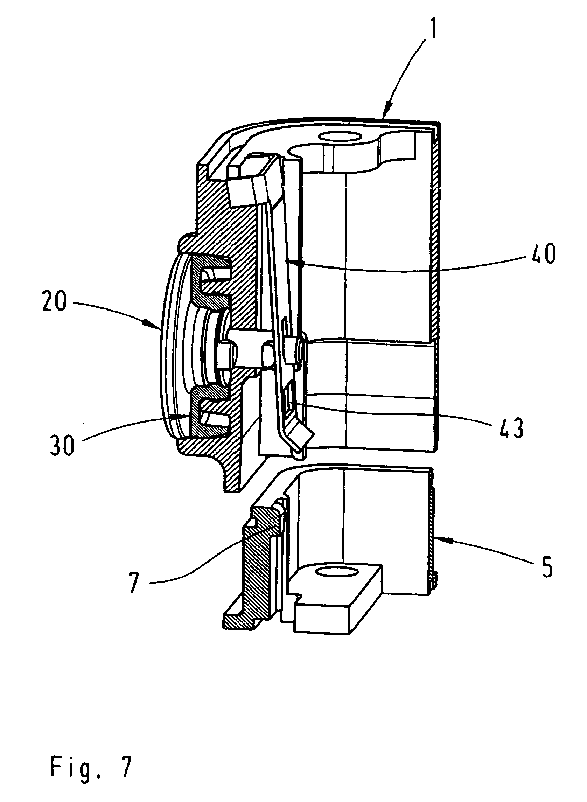

Dieser Vorgang ist in der Fig. 7 dargestellt. Dabei sind die beiden Gehäusehälften bereits voneinander getrennt, der Betätigungsknopf befindet sich jedoch noch innerhalb des äußeren Wulstes 10, so dass der Federhebel 40 mittels des Knebels 26 nach innen gedrückt wird und so die Freigabe der Rastöffnung 43 von der Rastnase 7 bewirkt.

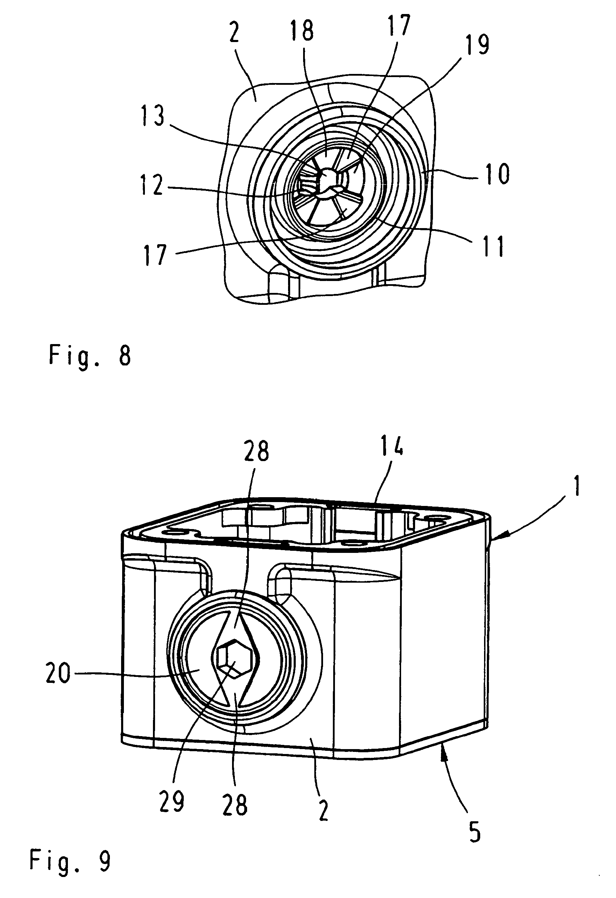

Für die Verriegelung der beiden Gehäuse 1, 5 sind die bereits weiter oben angedeuteten Strukturen in der Seitenwand 2, innerhalb des inneren Wulstes 11 sowie des Betätigungsknopfes 20 verantwortlich, die hier mit der Fig. 8 erläutert werden.

Im Zentrum des inneren Wulstes 11 ist, die Schlitzöffnung 12 mit der zentralen Kreisöffnung 13 vorgesehen.

Weiterhin weist das Zentrum des inneren Wulstes 11 als Besonderheit eine durch drei Ebenen gebildete kreuzförmige Struktur auf, wobei zunächst eine erhabene X-förmige, einem Andreaskreuz ähnelnde Kreuzform aus nicht miteinander verbundenen Kreuzbalken eine erste, äußere Ebene 17 bildet, an die sich eine hier senkrecht ausgerichtete, mittlere Ebene 18 zwischen den Kreuzbalken anschließt, sowie eine dritte untere Ebene 19, die hier waagerecht zwischen den Kreuzbalken ausgerichtet ist, in Verlängerung der Schlitzöffnung 12.

Äquivalent weist der Betätigungsknopf 20 eine Achse 25 mit einem Knebel 26 auf, der in die Schlitzöffnung 12 des innere Wulstes 11 einfügbar ist, so dass bei einer anschließenden 90° - Drehung des Betätigungsknopfes 20, der Knebel 26 hinter der Seitenwand 2 verriegelt wird, indem die X-förmige Sperrkontur 24 am Bund 22 des Betätigungsknopfes 20 bis in die dritte untere Ebene 19 hineingezogen wird, die das spiegelbildliche Negativ zur X-förmigen Sperrkontur 24 darstellt, und dort zunächst gegen ein weiteres Verdrehen verrastet. Dabei ist gleichzeitig der Federhebel 40 mittels des Sperrhakens 27 verriegelt, so dass das obere Gehäuseteil 1 mit dem unteren Gehäuseteil 5 verriegelt ist.

Im unverriegelten Zustand des Betätigungsknopfes 20 ist ein Teil des farbigen Dichtringes 30 als Kragen zur Statusanzeige sichtbar. Im verriegelten Zustand ist der Betätigungsknopf 20 mit dem Dichtring 30 im äußeren Wulst 10 des Gehäuses hinein verschoben, so dass der farbige Kragen nicht mehr sichtbar ist.

Als weiteres Merkmal kann der Betätigungsknopf 20 für eine versehentliche oder unbefugte Entriegelung gesperrt werden, wozu auf der Druckscheibe 21 des Betätigungsknopfes - wie in der Fig. 9 gezeigt ist - eine Werkzeugöffnung 29 vorgesehen ist, die hier für einen sechseckigen Schlüssel vorgesehen ist, jedoch auch beliebige andere Formen aufweisen kann. Des Weiteren ist auf der Druckscheibe eine Positionsanzeige 28 vorgesehen, die den Verriegelungs- bzw. Verrastungsstatus anzeigt, wobei die hier gezeigte senkrechte Stellung lediglich die Verrastung der beiden Gehäusehälften anzeigt.
- **1**: **Gehäuseoberteil (ohne Abdeckung)**
- 2: Seitenwand

- **5**: **Gehäuseunterteil**
- 6: Seitenwand
- 7: Rastnase
- 8: Führungsschienen für 40
- 9: Flansch

- **10**: äußerer Wulst
- 11: innerer Wulst
- 12: Schlitzöffnung
- 13: Kreisöffnung
- 14: Nutführung für Federhebel
- 15: Ausnehmung für Haltewinkel des Federhebels
- 16:
- 17: 1. Ebene (keilförmige Andreaskreuz-Balken)
- 18: 2. Ebene (senkrechte Fläche zwischen den Kreuzbalken)
- 19: 3. Ebene (waagrechte Fläche zwischen den Kreuzbalken)

- **20**: **Betätigungsknopf**
- 21: Druckscheibe
- 22: Bund für Dichtring
- 23: Ringnut auf Bund
- 24: X-förmige Sperrkontur
- 25: Achse
- 26: Knebel
- 27: Sperrhaken
- 28: Positionsanzeige, optisch (VerriegelungNerrastung)
- 29: Werkzeugöffnung

- **30**: **Dichtring U-förmig**
- 31: Kreisöffnung
- 32: Außenlippe
- 33: Innenlippe
- 34: innenliegender Bund, für Ringnut 23

- **40**: **Federhebel**
- 41: Haltewinkel
- 42: Schlüsselloch-Öffnung
- 43: Rastöffnung
- 44: Abbiegung

## Patentansprüche

1. Zumindest zweiteiliges Gehäuse mit einem Seitenwände (2) aufweisenden Gehäuseoberteil (1) mit einem Betätigungsknopf (20), der in Eingriff mit einem im Inneren des Gehäuseoberteiles (1) angeordneten Federhebet (40) steht, einem dazu passenden Gehäuseunterteil (5), und mit einer Verriegelungsvorrichtung, **dadurch gekennzeichnet,**
**dass** der Betätigungsknopf (20) an mindestens einer von zwei gegenüberliegenden Seitenwänden (2) des Gehäuseoberteiles (1) innerhalb von kreisförmigen Anformungen jeweils von außen bedienbar angeordnet ist,
**dass** der Betätigungsknopf (20) als kombinierter Dreh- und Druckknopf ausgebildet ist, und
**dass** der Federhebel (40) in Abhängigkeit der Stellung des Betätigungsknopfes (20) eine verrastende Verbindung oder eine verriegelnde Verbindung zwischen den beiden Gehäuseteilen (1, 5) bewirkt.

2. Gehäuse mit Verriegelungsvorrichtung nach Anspruch 1, **dadurch gekennzeichnet, dass** der Betätigungsknopf (20) eine im Wesentlichen T-förmige Struktur aufweist, mit einer Druckscheibe (21), mit einer als Bund (22) angefügten axialen Anformung, die eine umlaufende Nut (23) aufweist, sowie einer weiterführende, zentrale Achse (25), an deren Ende ein Sperrhaken (27) mit einem davon beabstandeten Knebel (26) angeformt ist.

3. Gehäuse mit Verriegelungsvorrichtung nach Anspruch 2, **dadurch gekennzeichnet, dass** der Betätigungsknopf (20), am Ende des Bundes (22) zur angeformten zentralen Achse (25), eine X-förmige, erhabene Sperrkontur (24) aufweist.

4. Gehäuse mit Verriegelungsvorrichtung nach Anspruch 1, **dadurch gekennzeichnet, dass** an dem Gehäuseoberteil (1) für den Betätigungsknopf (20) eine kreisförmige Anformung mit einem äußeren Wulst (10) und einem darin eingeschlossenen inneren Wulst (11) angeformt ist, wobei im Zentrum des inneren Wulstes (11) eine Schlitzöffnung (12) vorgesehen ist, durch die der Knebel (26) mit der Achse (25) des Betätigungsknopfes (20) hindurchgeführt ist, wobei die Druckscheibe (21) innerhalb des äußeren Wulstes (10) geführt ist.

5. Gehäuse mit Verriegelungsvorrichtung nach Anspruch 1, **dadurch gekennzeichnet, dass** der Federhebel (40) eine Schlüsselochöffnung (42) aufweist, in der die Achse (25) des Betätigungsknopfes (20) zwischen einem Knebel (26) und dem Sperrhaken (27) eingehakt ist.

6. Gehäuse mit Verriegelungsvorrichtung nach Anspruch 2, **dadurch gekennzeichnet, dass** unmittelbar hinter der Druckscheibe (21) des Betätigungsknopfes (20) und zwischen dem inneren Wulst (11) und dem äußeren Wulst (10) des Gehäuseoberteiles (1) ein farblich markierter Dichtring (30) angeordnet ist, der neben einer abdichtenden Aufgabe als Statusanzeige zur Funktion des Betätigungsknopfes (20) vorgesehen ist.

7. Gehäuse mit Verriegelungsvorrichtung nach Anspruch 6, **dadurch gekennzeichnet, dass** der Dichtring (30) als Doppellippe ausgeführt ist, mit einem U-förmigen Querschnitt, der durch eine innere Lippe (33) und eine äußere Lippe (32) gebildet ist, mit einer zentralen Öffnung (31), wobei die äußere Lippe (32) am äußeren Wulst (10) und die innere Lippe (33) am inneren Wulst (11) des Gehäuseoberteils (1) anliegt.

8. Gehäuse mit Verriegelungsvorrichtung nach Anspruch 7, **dadurch gekennzeichnet, dass** die innere Lippe (33) des Dichtringes (30) einen umlaufenden Bund (34) aufweist, der in eine Ringnut (23) auf dem Bund (22) des Betätigungsknopfes (20) eingreift.

9. Gehäuse mit Verriegelungsvorrichtung nach Anspruch 1, **dadurch gekennzeichnet, dass** der Federhebel (40) an seinem einen Ende einen über die Breite des Hebels reichenden U-förmigen Haltewinkel (41) und auf dem entgegengesetzten Ende eine Abbiegung (44) aufweist.

10. Gehäuse mit Verriegelungsvorrichtung nach Anspruch 1, **dadurch gekennzeichnet, dass** bei einem Druck auf den Betätigungsknopf (20) der Federhebel (40) im Inneren des ersten Gehäuseteiles (1) nach innen gedrückt wird, so dass eine beim Zusammenstecken der beiden Gehäuseteile ausgelöste Zwangsverrastung zwischen der Rastöffnung (43) des Federhebels (40) und einer Rastnase (7) im Inneren des zweiten Gehäuseteiles (5) gelöst wird.

11. Gehäuse mit Verriegelungsvorrichtung nach Anspruch 1, **dadurch gekennzeichnet, dass** der Betätigungsknopf (20) in der eingedrückten Stellung um 90° drehbar ist, wobei der Knebel (26) durch die Schlitzöffnung (12) hindurchgedrückt wird und hinter der Gehäusewand (2) arretiert ist und den Federhebel (40) blockiert, so dass die Rastöffnung (43) des Federhebels (40) an der Rastnase (7) des Gehäuseunterteiles (5) verriegelt ist.

12. Gehäuse mit Verriegelungsvorrichtung nach Anspruch 1, **dadurch gekennzeichnet, dass** der Betätigungsknopf (20) auf der Außenseite ein Positionsanzeige-Symbol (28) aufweist, innerhalb dessen Zentrum eine Ausnehmung (29) für ein dazu passendes Verriegelungswerkzeug vorgesehen ist.

## Claims

1. An at least two-part housing comprising an upper housing part (1) including side walls (2) and an actuating button (20) which is in engagement with a spring lever (40) arranged in the interior of the upper housing part (1), a matching lower housing part (5), and a locking device, **characterized in that** the actuating button (20) is each arranged on at least one of two opposite side walls (2) of the upper housing part (1) within circular integrally molded portions for operation from outside,
that the actuating button (20) is formed as a combined rotary and push button,
and
that, depending on the position of the actuating button (20), the spring lever (40) effects a latching connection or a locking connection between the two housing parts (1, 5).

2. The housing comprising the locking device according to claim 1, **characterized in that** the actuating button (20) includes a substantially T-shaped structure having a pressure disk (21), an axial integrally molded portion attached as a collar (22) and having a surrounding groove (23), and a continuing central pin (25) at the end of which a locking hook (27) with a toggle (26) spaced therefrom is integrally molded.

3. The housing comprising the locking device according to claim 2, **characterized in that** the actuating button (20) includes an X-shaped raised locking contour (24) at the end of the collar (22) facing the integrally molded central pin (25).

4. The housing comprising the locking device according to claim 1, **characterized in that** a circular integrally molded portion having an outer bead (10) and an inner bead (11) enclosed therein is integrally molded with the upper housing part (1) for the actuating button (20), a slot opening (12) being provided in the center of the inner bead (11) through which the toggle (26) is guided with
the pin (25) of the actuating button (20), the pressure disk (21) being guided within the outer bead (10).

5. The housing comprising the locking device according to claim 1, **characterized in that** the spring lever (40) includes a keyhole opening (42) in which the pin (25) of the actuating button (20) is hooked between a toggle (26) and the locking hook (27).

6. The housing comprising the locking device according to claim 2, **characterized in that** a sealing ring (30) that is marked in color is arranged immediately behind the pressure disk (21) of the actuating button (20) and between the inner bead (11) and the outer bead (10) of the upper housing part (1) and, in addition to having a sealing function, is provided as a status indicator of the function of the actuating button (20).

7. The housing comprising the locking device according to claim 6, **characterized in that** the sealing ring (30) is in the form of a double lip, with a U-shaped cross-section that is formed by an inner lip (33) and an outer lip (32), with a central opening (31), the outer lip (32) resting against the outer bead (10) and the inner lip (33) resting against the inner bead (11) of the upper housing part (1).

8. The housing comprising the locking device according to claim 7, **characterized in that** the inner lip (33) of the sealing ring (30) includes a surrounding collar (34) which engages into an annular groove (23) on the collar (22) of the actuating button (20).

9. The housing comprising the locking device according to claim 1, **characterized in that** on its one end, the spring lever (40) has a U-shaped holding bracket (41) extending over the width of the lever and, on the opposite end, has a bent portion (44).

10. The housing comprising the locking device according to claim 1, **characterized in that** upon a pressure on the actuating button (20), the spring lever (40) in the interior of the first housing part (1) is pushed inwards, so that a forced latching connection between the latching opening (43) of the spring lever (40) and a latching nose (7) in the interior of the second housing part (5) that is brought about when fitting the two housing parts together is released.

11. The housing comprising the locking device according to claim 1, **characterized in that** the actuating button (20) can be turned through 90 degrees in the depressed position, the toggle (26) being pushed through the slot opening (12) and fixed in position behind the housing wall (2) and blocking the spring lever (40), so that the latching opening (43) of the spring lever (40) is locked on the latching nose (7) of the lower housing part (5).

12. The housing comprising the locking device according to claim 1, **characterized in that** the actuating button (20) has a position indicator symbol (28) on the outside, a recess (29) for a matching locking tool being provided within the center of the symbol (28).

## Revendications

1. Boîtier en au moins deux parties, comportant une partie supérieure de boîtier (1) présentant des parois latérales (2) avec un bouton de commande (20) qui est en engagement avec un levier ressort (40) agencé à l'intérieur de la partie supérieure de boîtier (1), une partie inférieure de boîtier (5) adaptée à celle-ci, et avec un dispositif de verrouillage, **caractérisé en ce que** le bouton de commande (20) est agencé actionnable respectivement depuis l'extérieur sur au moins une de deux parois latérales (2) opposées de la partie supérieure de boîtier (1) à l'intérieur de conformations circulaires,
**en ce que** le bouton de commande (20) est réalisé sous forme de bouton combiné du type rotatif et poussoir, et
**en ce que** le levier ressort (40) provoque en fonction de la position du bouton de commande (20) une liaison par enclenchement ou une liaison par verrouillage entre les deux parties de boîtier (1, 5).

2. Boîtier à dispositif de verrouillage selon la revendication 1, **caractérisé en ce que** le bouton de commande (20) présente une structure sensiblement en forme de T, qui comporte une rondelle de pression (21), une conformation axiale rapportée sous forme de collerette (22) qui présente une rainure (23) périphérique, ainsi qu'un axe (25) central en prolongement à l'extrémité duquel est conformé un crochet de blocage (27) avec un goujon (26) espacé de celui-ci.

3. Boîtier à dispositif de verrouillage selon la revendication 2, **caractérisé en ce que** le bouton de commande (20) présente, à l'extrémité de la collerette (22) tournée vers l'axe central (25) conformé, un contour de blocage (24) en relief en forme de X.

4. Boîtier à dispositif de verrouillage selon la revendication 1, **caractérisé en ce que** sur la partie supérieure de boîtier (1), une conformation circulaire est conformée pour le bouton de commande (20), avec un bourrelet extérieur (10) et un bourrelet intérieur (11) enfermé dans celui-ci, une ouverture en forme de fente (12) étant prévue au centre du bourrelet intérieur (11), à travers laquelle est introduit le goujon (26) avec l'axe (25) du bouton de commande (20), la rondelle de pression (21) étant guidée à l'intérieur du bourrelet extérieur (10).

5. Boîtier à dispositif de verrouillage selon la revendication 1, **caractérisé en ce que** le levier ressort (40) présente une ouverture en trou de serrure (42) dans laquelle l'axe (25) du bouton de commande (20) est accroché entre le goujon (26) et le crochet de blocage (27).

6. Boîtier à dispositif de verrouillage selon la revendication 2, **caractérisé en ce que** directement derrière la rondelle de pression (21) du bouton de commande (20) et entre le bourrelet intérieur (11) et le bourrelet extérieur (10) de la partie supérieure de boîtier (1) est agencée une bague d'étanchéité (30) marquée en couleur qui, en plus d'un objectif d'étanchéité, est prévue en tant qu'affichage d'état du fonctionnement du bouton de commande (20).

7. Boîtier à dispositif de verrouillage selon la revendication 6, **caractérisé en ce que** la bague d'étanchéité (30) est réalisée sous forme de double lèvre avec une section transversale en forme de U, qui est formée par une lèvre intérieure (33) et une lèvre extérieure (32) avec une ouverture (31) centrale, la lèvre extérieure (32) étant en appui sur le bourrelet extérieur (10) et la lèvre intérieure (33) étant en appui sur le bourrelet intérieur (11) de la partie supérieure de boîtier (1).

8. Boîtier à dispositif de verrouillage selon la revendication 7, **caractérisé en ce que** la lèvre intérieure (33) de la bague d'étanchéité (30) présente une collerette (34) périphérique qui s'engage dans une rainure annulaire (23) sur la collerette (22) du bouton de commande (20).

9. Boîtier à dispositif de verrouillage selon la revendication 1, **caractérisé en ce que** le levier ressort (40) présente à une de ses extrémités une cornière de retenue (41) en forme de U allant sur la largeur du levier et, à l'autre extrémité, une courbure (44).

10. Boîtier à dispositif de verrouillage selon la revendication 1, **caractérisé en ce qu**'en cas d'une pression sur le bouton de commande (20), le levier ressort (40) à l'intérieur de la première partie de boîtier (1) est pressé vers l'intérieur, de telle sorte qu'un enclenchement forcé, déclenché lors de l'assemblage des deux parties de boîtier, entre l'ouverture d'enclenchement (43) du levier ressort (40) et un ergot d'enclenchement (7) à l'intérieur de la deuxième partie de boîtier (5) est détaché.

11. Boîtier à dispositif de verrouillage selon la revendication 1, **caractérisé en ce que** dans la position enfoncée, le bouton de commande (20) peut tourner de 90°, le goujon (26) étant pressé à travers l'ouverture (12) en forme de fente et arrêté derrière la paroi de boîtier (2) et bloque le levier ressort (40), de telle sorte que l'ouverture d'enclenchement (43) du levier ressort (40) est verrouillée sur l'ergot d'enclenchement (7) de la partie inférieure de boîtier (5).

12. Boîtier à dispositif de verrouillage selon la revendication 1, **caractérisé en ce que** le bouton de commande (20) présente sur la face extérieure un symbole d'affichage de position (28) dans le centre duquel est prévu un évidement (29) pour un outil de verrouillage adapté à celui-ci.
